Europäisches Patentamt

European Patent Office

Office européen des brevets

(19)

(11) EP 0 729 095 A1

(12) EUROPEAN PATENT APPLICATION

(43) Date of publication:
28.08.1996 Bulletin 1996/35

(51) Int Cl.6: G06F 9/38

(21) Application number: 96300965.9

(22) Date of filing: 13.02.1996

(84) Designated Contracting States:
DE FR GB IT NL

(30) Priority: 23.02.1995 US 392716

(71) Applicant: SUN MICROSYSTEMS, INC.
Mountain View, CA 94043 (US)

(72) Inventor: Leung, Arthur T.
Sunnyvale, California 94086 (US)

(74) Representative: W.P. Thompson & Co.
Coopers Building,
Church Street
Liverpool L1 3AB (GB)

(54) Dynamic branch prediction apparatus

(57)    The present invention relates to a processor capable of processing the instructions of a computer program. The processor includes a next fetch address circuit for fetching instructions of the computer program and a decode circuit, coupled to the next fetch address circuit, for partially decoding the fetched instructions to determine if a fetched instruction is a conditional branch. The computer also includes a first memory, coupled to the next fetch address circuit, for storing a plurality of branch predict entries for the conditional branch instructions of the program. The computer also includes a separate second memory for storing a plurality of strength entries related to the plurality branch predict entries in the first memory. Update circuitry, coupled to the first memory and the second memory, is also provided for updating the corresponding branch prediction entry and the related strength entry in the first and second memories respectively after a conditional branch instruction is executed and resolved in the pipelined computer.

FIG. 3

## Description

The present invention relates to computers.

More particularly, the present invention relates to apparatus for handling branch instruction in a computer system.

A computer program is a number of elemental instructions, selected from an instruction set, and arranged by the programmer into a certain sequence called the program order. When a program is executed, the instructions of the program are sequentially provided in program order to a processor for execution. An instruction appearing first in the program order is considered an "older" instruction relative to subsequent instructions in the program which is considered a "younger" instruction. An instruction set, and consequently a computer program written from the instruction set, typically includes a number of different types of instructions, including floating point operations, integer operations, load/store operations and branch instructions.

A branch instruction is an instruction that may cause a change in the program order. There are several types of branch instructions. A branch instruction may contain the address of the instruction to be branched to (i.e., the target address). Alternatively, a branch instruction may calculate the target address based on the contents of a register defined in the instruction or some other specified address location. A conditional branch is a branch instruction that causes a transfer in the program order to a target address if the condition is met. If the condition is not met, then the branch is not taken, and execution continues at the next sequential instruction.

In a pipeline microprocessor, a number of stages are juxtaposed to form a pipe. Each stage in the pipeline performs a specific operation. Instructions sequentially enter at the first stage of the pipeline, and with each clock cycle, the instructions in the pipeline are passed from one stage to the next. As an instruction progresses down the pipeline, the specific operation of each stage is performed on the instruction. After an instruction is operated on in the last stage, the fully executed instruction exits the pipeline with the next clock cycle. In a pipeline microprocessor, multiple instructions are processed simultaneously at high speed, thereby increasing the throughput of the processor.

One factor affecting the frequency of the clock cycle of the pipeline is the time required for the slowest stage in the pipeline. Traditionally, pipelined microprocessors have had five stages: (1) instruction fetch; (2) instruction decode and register fetch; (3) execute; (4) memory access; and (5) write back. As cycle times have become smaller and smaller, it has become more and more difficult to accomplish the intended operation of certain complex stages in the pipeline within the reduced cycle time. Design engineers have overcome this difficulty by splitting problem stages into two or more stages. As a result, the trend in current state of the art microprocessors is to provide more than five stages.

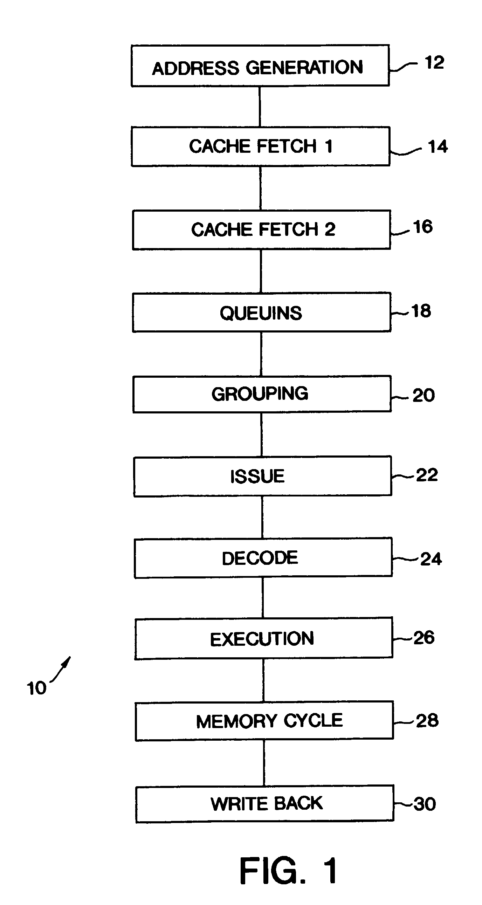

Referring to Figure 1, an example of a ten stage microprocessor pipeline is shown. The pipeline 10 includes an address generation stage 12, a first cache fetch stage 14, a second cache fetch stage 16, a queuing stage 18, a grouping stage 20, an issue stage 22, a decode stage 24, an execution stage 26, a memory cycle stage 28, and a write back stage 30. In the address generation stage 12, the address for the next instruction is generated. In the first cache fetch stage 14, the address for the next instruction is applied to the instruction cache. In the second cache fetch stage 16, the next instruction is read from the instruction cache. In the queuing stage 18, the next instruction is queued in an instruction buffer. In the grouping stage 20, a subset or window of instructions in the queue equal to the scalarity (i.e., the number of execution units) of the microprocessor is determined. The instructions in the window are then analyzed, and resources and register value dependencies are ascertained. In the issue stage 22, the instructions, where the resource and register value dependencies that have been or can be resolved in the execution stage 26, are issued. In the decode stage 24, the issued instructions are decoded. In the execution stage 26, the decoded instructions are executed. In the memory cycle stage 28, memory instructions access the data cache (not shown). In the write back stage 30, the result of the executed instructions in the pipeline register are written back to the register file.

Conditional branch instructions are problematic for pipeline microprocessors. When a conditional branch occurs, it is fetched, decoded and executed. The branch direction of the conditional branch instruction is typically not resolved until the execute stage 26 in the pipeline 10, when the conditional branch instruction is executed. The next instruction behind the conditional branch therefore must wait until the conditional branch is resolved before the next instruction can be dispatched. As a result, a delay of several cycles typically occurs between the execution of the branch instruction and the next instruction.

Branch prediction algorithms provide a solution for eliminating the delay of dispatching a next instruction after a conditional branch. With branch prediction algorithms, the outcome of the conditional branch is anticipated during the first cache fetch stage 14 of the pipeline 10. In other words,when a conditional branch is fetched, a branch prediction is made and is used to obtain the next fetch address. Based on the prediction, the instruction corresponding to the anticipated next fetch address is speculatively dispatched into the pipeline immediately after the conditional branch. For example, if the prediction of a conditional branch is "Branch Taken", then the target address of the conditional branch is next fetched and dispatched. On the otherhand, if the prediction is "Branch Not Taken", then the next fetch address is the next address after the conditional branch in the program order. If the prediction, regardless of the path, proves to be correct, then execution continues along the predicted path. The problem with branch prediction algorithms is that with an incorrect prediction, all the speculatively dispatch instructions in the pipeline must be flushed. Operation then resumes at the actual next address. The flushing operation is time consuming, and therefore reduces the throughout of the pipeline 10.

Several branch predictions schemes are known in the prior art. Static branch prediction schemes select a particular path, either Branch Taken or Branch Not Taken, for all conditional branch instructions in a program. A more sophisticated branch prediction scheme involves the use of a branch prediction table with a single entry. The entry, which is used for all the conditional branch instructions in a program, is dynamically updated each time a conditional branch is resolved. The ability to dynamically update the entry provides a higher degree of accuracy than static branch prediction schemes. A more involved branch prediction scheme relies on a branch prediction table having a plurality of entries. The individual entries in the branch prediction table are dynamically updated as corresponding conditional branch instructions are executed and resolved. The use of a branch prediction table tends to significantly reduce the number of branch mispredictions during execution of a program.

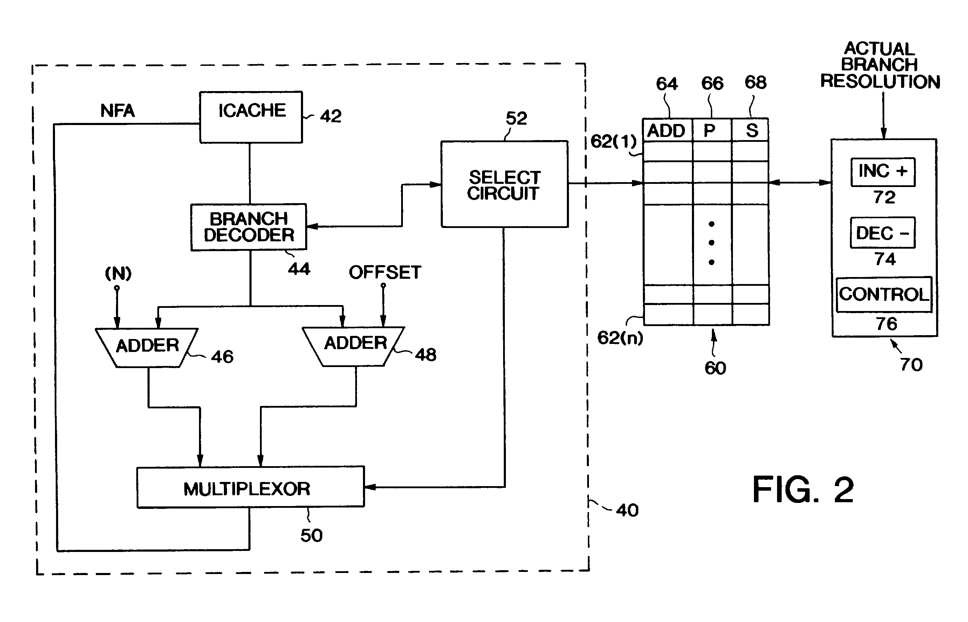

Referring to Figure 2, a block diagram of a next fetch address circuit and a branch prediction table of a prior art microprocessor is shown. The next fetch address circuit 40 includes an instruction cache 42, a branch decoder 44, a first adder 46, a second adder 48, a multiplexor 50, and select circuit 52. The branch prediction table 60 includes a plurality (n) entries $62_{(1)}$ through $62_{(n)}$. Each entry 62 includes an address field 64, for storing the address (ADD) of a conditional branch instruction, a field 66 for storing a branch prediction bit (P), and a field 68 for storing a strength bit (S). An incrementor/decrementor circuit 70 is also associated with the branch prediction table 60. The incrementor/decrementor 70 includes an incrementor circuit 72, a decrementor circuit 74, and a control circuit 76. The incrementor/decrementor circuit 70 is coupled to receive the actual branch resolution of a conditional branch instruction after it has been resolved in the execution stage 26 of the pipeline 10.

Each entry 62 in the branch prediction table can assume one of four possible states, depending on the value of the predict bit (P) and the strength bit (S). Note, when the predict bit (P) is set to (1), it indicates Branch Taken, regardless of the value of the strength bit (S). Alternatively, when the predict bit (P) is reset to (0), it indicates Branch Not Taken. Table I below specifies the four possible states of an entry 62.

Table I

| P | S | State |
|---|---|---|
| 1 | 1 | Branch Taken Strong |
| 1 | 0 | Branch Taken Weak |
| 0 | 1 | Branch Not Taken Weak |
| 0 | 0 | Branch Not Taken Strong |

Operation of the next fetch address circuit 40, the branch prediction table 60, and the incrementer/decrementor circuit 70 of Figure 2 is best explained with reference to the pipeline 10 of Figure 1. During operation, an instruction enters the pipeline at the address generation stage 12. The instruction then proceeds through the pipeline stages 18 through 30 as described above for execution.

When the instruction is in the address generation stage 12, the next fetch address circuit 40 and the branch prediction table 60 cooperate together to generate the next fetch address (NFA). The NFA is then applied to the instruction cache 42 during the first cache fetch stage 14. The branch decoder 44 partially decodes the instruction as it is read out of the instruction cache 42 during the second cache fetch stage 16. The outcome of the partial decode is provided to the select circuit 52. Depending on whether or not the instruction is a conditional branch, the select circuit 52 implements one of two courses of action.

1. If the instruction is not a conditional branch, the select circuit 52 selects the output of the first adder 46 as the output of multiplexor 50. The first adder 46 adds the address of the instruction with the modulo of the line size of the instruction cache 42. As a result, the NFA is the continuation of the sequential stream of instructions in the program order.

2. If the instruction is a conditional branch, then the select circuit 52 checks the entry 62 corresponding to the conditional branch instruction in the branch predict table 60. Depending on the state of the corresponding entry 62, the select logic 52 implement one of two courses of action.

    a. If the state of the matching entry 62 is "Branch Not Taken Strong" or "Branch Not Taken Weak", then the select circuit 52 directs the multiplexor 50 to select the output from the first adder 46. As a result, the NFA is the next instruction in the continuation of the stream of instructions in the program.

    b. If the state of the entry 62 is "Branch Taken Strong" or "Branch Taken Weak", then the select circuit 52 directs the multiplexor 50 to select the output of the second adder 48. The second adder 48 adds the address of the conditional branch instruction with an offset to obtain the target address of the conditional branch. In this manner, the NFA is set to the target address of the conditional branch instruction.

Once the NFA is generated, it is applied to the instruction cache 42, and the steps described above is repeated. In this manner the instructions of the program are sequentially provided into the pipeline 10.

If an instruction is a conditional branch, the actual direction of the branch is obtained when the branch is resolved in the execution stage 26 of the pipeline 10. The branch resolution, regardless of whether it is Branch Taken or Branch Not Taken, is then applied to the incrementor/decrementor circuit 70 so that the corresponding entry 62 in the branch prediction table 60 can be updated if needed. For example, if the state of an entry 62 is Branch Taken Weak and the actual outcome of the corresponding conditional branch instruction is Branch Taken, then the predict bit and the strength bit (P=1, S=0) are incremented by the increment circuit 72 and the entry 62 assumes the Branch Taken Strong state (P=1, S=1). On the otherhand, if the actual branch was Branch Not Taken, then the decrementor circuit decrements the predict bit and strength bit (P=1, S=0) to a Branch Not Taken Weak state (P=0, S=1). Although all the possible increment/decrement situations are not described, the general rule of operation is that the predict bit (P) and strength bit (S) of an entry 62 are incremented with a correct prediction and decremented with a misprediction. It should be noted, however, that the controller 76 disables the write enable (not shown) of table 60 under the condition where the state of a conditional branch is Branch Taken Strong (P=1, S=1), and the actual branch is Branch Taken. Otherwise, the increment circuit 72 would increment the predict bit (P) and strength bit (S) to the incorrect state of Branch Not Taken Strong (P=0, S=0). The controller 76 also disables the write enable of the table 60 in the complement situation when state of an entry 62 is Branch Not Taken Strong (P=0, S=0) and the actual branch of the corresponding instruction is not taken.

A number of problems are associated with the prior art branch prediction table 60. The branch predict table 60 includes both a branch predict bit (P) and strength bit (S) for each entry 62 in the table. Together, the two bits define one of four states for each entry 62. However, only the predict bit (P) in an entry 62 is needed during the address generation stage 12. The strength bit (S) is irrelevant to the prediction of the NFA, and is not needed until after the instruction is resolved in the execution stage 26. Nevertheless, with the prior art, the select circuit 52 is required to access both the predict bit (P) and strength bit (S) when accessing the table 60 during the address generation stage 12. This arrangement tends to increase the overall size of the memory structure used to store the table 60, which in turn, significantly slows down the access time of the table 60. The incrementor/decrementor circuit 70 also adds complexity to the branch prediction scheme. The state of an entry 62 must be known before it can be updated. Further, additional logic circuitry is required to disable the write enable of the table 60. This additional complexity tends to increase the write time required to update an entry 62 in the branch prediction table 60, which in turn increases the possibility of a data hazard condition occurring. In summary, the size and complexity of the table 60 and the incrementor/decrementor circuitry 70 increases the read and write times of the branch prediction table 60, thereby making a further reduction in the cycle time of the pipeline 10 of the computer more difficult.

## SUMMARY OF THE INVENTION

The present invention relates to a processor capable of processing the instructions of a computer program. The processor includes a next fetch address circuit for fetching instructions of the computer program and a decode circuit, coupled to the next fetch address circuit, for partially decoding the fetched instructions to determine if fetched instruction is a conditional branch. The computer also includes a first memory, coupled to the next fetch address circuit, for storing a plurality of branch predict entries for the conditional branch instructions of the program. The computer also includes a separate second memory for storing a plurality of strength entries related to the plurality branch predict entries in the first memory. Update circuitry, coupled to the first memory and the second memory, is also provided for updating the corresponding branch prediction entry and the related strength entry in the first and second memories respectively after a conditional branch instruction is executed and resolved in the pipelined computer.

During operation, an instruction is read out of the instruction cache. The decode circuit determines if the instruction is a conditional branch. In the event the instruction is a conditional branch, the corresponding branch prediction entry in the first memory is accessed. The branch prediction entry provides a prediction of either Branch Not Taken or Branch Taken. In the event the prediction is Branch Not Taken, then the sequential address after the conditional branch instruction is fetched by the next fetch address circuit. On the otherhand, if the prediction is Branch Taken, then the next fetch address circuit generates the target address of the branch instruction and the target address is next fetched.

After the conditional branch is executed in the processor, the actual branch resolution of the conditional branch is resolved. The update circuit, which receives the actual branch resolution, updates the branch prediction entry and the strength entry in the first memory and the second memory in accordance with two rules respectively. The prediction entry in the first memory is inverted whenever there is a misprediction when the related strength bit (S) indicates Weak. The strength entry in the second memory is set to a first state whenever the branch prediction is correct, and a second state whenever the branch prediction is incorrect.

The present invention provides numerous benefits over the prior art. In particular, by storing the conditional branch prediction entry and the strength entry in two separate memory structures, the size and the complexity of each memory structure is reduced. The access time for obtaining the prediction entry from the first memory is therefore reduced, relative to the prior art which uses a single memory to store both predict and strength information. Further, by separating the predict and strength memories, the circuitry required to update the predict information and the strength information is simplified. Both of these factors permit a reduction in the cycle time of a pipeline microprocessor, which in turn, helps increase the speed and throughput of the computer.

The present invention will now be further described, by way of example, with reference to the accompanying drawings, in which:-

**Figure 1** illustrates the stages of a pipelined microprocessor.

**Figure 2** illustrates the next fetch address circuitry and branch prediction table for the microprocessor according to the prior art.

**Figure 3** illustrates the next fetch address circuitry and branch prediction table for the microprocessor according to the present invention.

**Figure 4** illustrates an update circuit used to update the branch prediction table for the microprocessor according to the present invention.

## DESCRIPTION OF THE PREFERRED EMBODIMENT

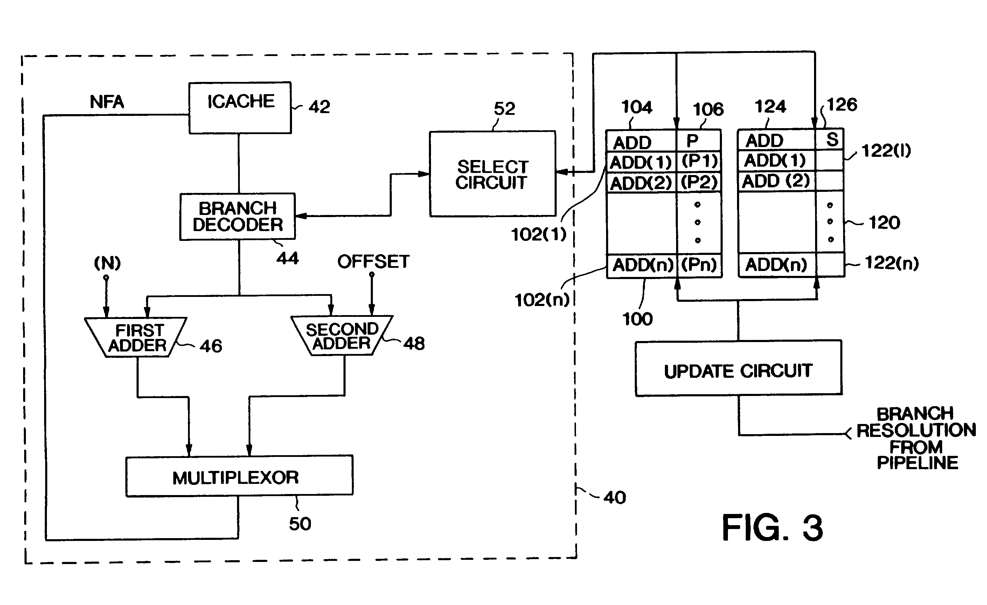

Referring to Figure 3, a next fetch address circuit, a branch prediction table, a strength table, and an update circuit for a pipeline microprocessor of the present invention is shown. The next fetch address circuit 40 includes an instruction cache (I cache) 42, a branch decoder 44, first adder 46, second adder 48, multiplexor 50, and select circuit 52. Like elements that perform the same or similar functions in Figure 2 are designated by the same reference numerals in Figures 3, and are therefore not described in detail herein. The present invention includes a first memory 100 for storing a first table of branch prediction entries for the conditional branch instructions of the program. The present invention also includes a separate second memory 120 for storing a second table of strength entries. The strength entries are related to the branch prediction entries of the first memory respectively. Accordingly, for each conditional branch instruction in the program, a branch predict entry is provided in the first memory 100 and a related strength entry is provided in the second memory 120. The present invention further includes an update circuit 130. The update circuit 130 is coupled to receive the actual branch path of a conditional branch instruction as it is resolved in the execution stage 26 of the pipeline 10. The update circuit 130 updates the corresponding entry in the first memory 100 and the related strength entry in second memory 120 in response to the actual branch path of the conditional instruction. In contrast with the prior art, a single table was used for storing both the branch prediction information and the strength information and an incrementor/decrementor circuit was used to update the entries in the single memory.

The first memory 100 includes a plurality of entries $102_{(1)}$ through $102_{(n)}$. Each entry $102_{(1)}$ through $102_{(n)}$ includes an address field 104 for storing an address $ADD_{(1)}$ through $ADD_{(n)}$ of a conditional branch instruction respectively. Each entry $102_{(1)}$ through $102_{(n)}$ also includes a branch prediction field 106. The prediction field 106 contains branch prediction bits $P_{(1)}$ through $P_{(n)}$ for each address $ADD_{(1)}$ through $ADD_{(n)}$ respectively. The second memory 120 includes a plurality of entries $122_{(1)}$ through $122_{(n)}$. Each entry $122_{(1)}$ through $122_{(n)}$ includes an address field 124 for storing the addresses $ADD_{(1)}$ through $ADD_{(n)}$ of the conditional branch instructions referred to in the first memory 100 respectively. Each entry 122 also includes a strength field 126. The strength field 126 contains a strength entry $S_{(1)}$ through $S_{(n)}$ for each address $ADD_{(1)}$ through $ADD_{(n)}$ respectively.

The branch prediction entry (P) in field 106 defines one of two possible branch paths for a corresponding conditional branch instruction; either Branch Taken or Branch Not Taken. The predict entry (P) contained is updated in accordance with a update rule. Table II below provides the update rule, and the predict direction for a conditional branch instruction, depending on the state of the branch prediction entry (P) in the field 106.

Table II

| ADD (field 104) | (P) (field 106) | Prediction | Update Rule |
|---|---|---|---|
| ADD (n) | 0 | Branch Not Taken | The prediction entry (P) is inverted whenever there is a misprediction of the conditional branch instruction and the state of the related strength bit (S) is Weak. |
| | 1 | Branch Taken | |

The strength entry (S) in field 126 defines one of two strength states for a conditional branch instruction; either Strong or Weak. The predict entry (S) is also updated in accordance with a update rule. Table III below provides the update rule, and strength status for a conditional branch instruction, depending on the state of the strength entry (S).

Table III

| ADD (Field 124) | (S) (Field 126) | Strength | Update Rule |
|---|---|---|---|
| ADD (n) | 0 | Weak | The strength bit (S) is set to Strong with each correct prediction and reset to Weak with each misprediction. |
| | 1 | Strong | |

Operation of the next fetch address circuit 40, the first memory 100, and the second memory 120 of Figure 3 is best explained with reference to the pipeline 10 of Figure 1. During operation, an instruction enters the pipeline at the address generation stage 12. The instruction then proceeds through the pipeline stages 18 through 30 as described above for execution. The next fetch address circuit 40 and the first memory 100 cooperate together to generate the next fetch address (NFA). The branch decoder 44 partially decodes the instruction as it is read out of the instruction cache 42 during the second cache fetch stage 16. The outcome of the partial decode is then provided to the select circuit 52. Depending on whether or not the instruction is a conditional branch, the select circuit 52 implements one of two courses of action.

1. If the instruction is not a conditional branch, the select circuit 52 selects the output of the first adder 46 as the output of multiplexor 50. The first adder 46 adds the address of the instruction with the module of the line size of the instruction cache 42. As a result, the NFA is the continuation of the sequential sequential stream of instructions in the program order.
2. If the instruction is a conditional branch, then the select circuit 52 accesses the corresponding entry 102 in the first memory 100. Depending on the state of the branch prediction entry (P) in the corresponding entry 102, the select logic 52 implement one of two courses of action.

   a. If the state of the entry is "Branch Not Taken" (P=0), then the select circuit 52 directs the multiplexor 50 to select the output from the first adder 46. As a result, the NFA is the next instruction in the continuation of the stream of instructions in the program.
   b. If the state of the entry is "Branch Taken" (P=1), then the select circuit 52 directs the multiplexor 50 to select the output of the second adder 48. The second adder 48 adds the address of the conditional branch instruction with an offset to obtain the target address of the conditional branch. In this manner, the NFA is set to the target address of the conditional branch.

Once the NFA is generated, it is applied to the instruction cache 42, and the steps described above is repeated. In this manner the instructions of the program are sequentially provided into the pipeline 10.

If an instruction is a conditional branch, the actual direction of the branch is obtained when the branch is resolved in the execution stage 26 of the pipeline 10. The branch resolution, regardless of whether it is Branch Taken or Branch Not Taken, is applied to the update circuit 130. The update circuit 130 updates the corresponding entry 102 in the first memory 100 in accordance with the update rule; the predict bit (P) is inverted whenever there is a misprediction of the conditional branch instruction and the related strength bit (S) is in a Weak state. For example, if the branch prediction entry indicates Branch Taken (P=1), and the strength entry is in a strong state (S=1), then the branch prediction entry is not updated by the update circuit 130 the actual branch is resolved as Branch Not Taken. However, it the branch predict entry indicates Branch Taken and the strength entry indicates Weak, the predict entry is inverted (P=0) with a misprediction.

The update circuit 130 is also responsible for updating the strength entry (S) in the second memory 120 after the corresponding conditional branch is executed. In accordance with the above defined update rule, the strength entry is updated after each branch misprediction. For example, the state of a strength entry (S) is updated from Weak to Strong or Strong to Weak with each branch misprediction. With a correct prediction, the strength entry (S) is not updated, and is maintains its current state.

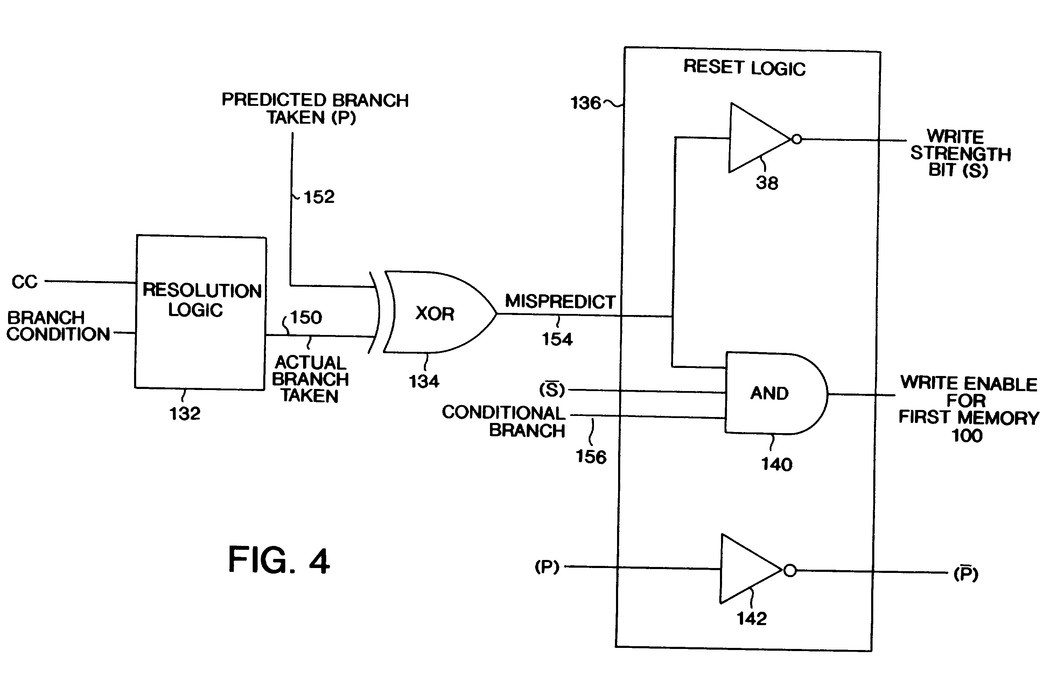

Referring to Figure 4, a logic diagram of the update circuit is shown. The update circuit 130 includes resolution logic block 132, an XOR gate 134, and a reset logic block 136. The reset logic block 136 includes a first inverter 138, a AND gate 140, and a second inverter 142. The resolution logic block 132 is coupled to receive the condition codes (cc) defined by a conditional branch instruction and the branch condition.

The resolution logic block 132 generates an actual branch taken signal 150 in response thereto. The XOR gate 134 is coupled to receive the actual branch taken signal 150 and the predicted branch taken signal (P) for the conditional branch instruction. The XOR gate 134 generate a logic high mispredict signal 154 whenever the Actual Branch Taken

6

signal 150 and the predicted branch taken signal (P) are different (i.e., a misprediction). The XOR gate 134 drives signal 154 low when a correct prediction is made, i.e., when the actual branch taken signal 150 and the predicted branch taken signal (P) are the same.

The reset logic block 136 is responsible for updating the predict bit (P) in the first memory 100 corresponding to the conditional branch instruction and the related strength bit (S) in the second memory in accordance with the above defined rules. Specifically, the first inverter 138 sets the strength bit (S ) to strong (S=1) with each correct prediction and resets the signal to Weak (S=0) with each misprediction. For example, when the signal 154 is high, indicating a misprediction, the inverter 138 inverts the signal (low). The output of the inverter 138 is then written into the second memory, and the Strength bit is reset to the Weak state (S=0). Alternatively, when the mispredict signal 154 is low, indicating a correct prediction, the inverter 138 generates a high output signal, and the strength bit when written into the first memory is set to the strong state (S=1). The AND gate 140 and the inverter 142 operate together to enforce the update rule for the predict bit (P). Specifically, the AND gate 140 activates the write enable of the first memory only when the misprediction signal 154 is high indicating a misprediction, the strength bit indicates a Weak state ($\bar{S}$=1), and the Conditional Branch signal 156 is high, indicating that the instruction is a conditional branch. The second inverter 142 inverts the predict bit (P) and generates the signal ($\bar{P}$) which is written into the first memory 100 when the write enable of the first memory 100 is activated. Under all other conditions, the predict bit ($\bar{P}$) is not written into the first memory 100 because the write enable is not activated. Accordingly, the rule of updating the predict bit only when there is a misprediction and state of the related strength bit is Weak is enforced.

In a program with relatively few conditional branch instructions, it is ideal to provide one entry 102 in memory 100 and one related entry 122 in the second memory 120 for each conditional branch instruction. However, most programs have many more conditional branch instructions than the number of entries that can be practically provided in the first memory 100 and the second memory 120. Therefore, a hashing function, may be used so that two or more conditional branch instructions can access the same entry 102 in first memory 100 and related entry 122 in second memory 120.

According to various embodiments of the invention, the first memory 100 and the second memory 120 may be implemented in two separate random access memories (RAMs). The first memory 100, in one embodiment of the invention, is implemented using a dual ported memory array. The second memory 120, however, can be implemented using either a single ported or a dual ported memory structure. Since updating the second memory 120 is not timing critical to the operation of the pipeline 10, the simpler single ported memory is preferably used.

It should be understood that various alternatives to the embodiments of the invention described herein may be employed in practicing the invention. It is intended that the following claims define the scope of the invention and that the structures and methods within the scope of these claims and their equivalents be covered thereby.

## Claims

1. A computer for processing instructions of a computer program, the computer comprising:

   a pipeline for executing the instructions of the computer program;
   a next fetch address circuit, coupled to the pipeline, for fetching a first instruction of the computer program;
   a decode circuit, coupled to the next fetch address circuit, for partially decoding the first instruction after it has been fetched and for determining if the first instruction is a conditional branch;
   a first memory, coupled to the next fetch address circuit, for storing a branch prediction entry corresponding to the first instruction if the first instruction is a conditional branch; and
   a second memory, coupled to the pipeline, for storing a strength entry related to the branch prediction entry in the first memory.

2. The computer of claim 1, further comprising update circuitry, coupled to the first memory, for updating the branch entry corresponding to the first instruction in the first memory after the first instruction is executed and resolved in the pipelined computer.

3. The computer of claim 2, wherein the update circuitry is further for updating the branch prediction entry corresponding to the first instruction after a predetermined number of consecutive mispredictions of a predicted path of the first instruction.

4. The computer of claim 3, wherein the branch prediction entry contains a predict bit and the update circuitry inverts the predict bit from a first state to a second state after the predetermined number of consecutive mispredictions.

5. The computer of claim 1, wherein the first memory is a dual ported random access memory.

**6.** The computer of claim 5, wherein the first port of the dual ported random access memory is for reading the branch prediction entry corresponding to the first instruction and the second port of the dual ported random access memory is for updating a second branch prediction entry in the first memory corresponding to an older instruction, relative to the first instruction, in the computer program.

**7.** The computer of claim 1, wherein the second memory is a single ported random access memory.

**8.** The computer of claim 1, further comprising an update circuit, coupled to the second memory, the update circuit for updating the strength entry related to the branch prediction entry in the first memory after the first instruction is executed and resolved in the pipeline.

**9.** The computer of claim 8, wherein the update circuit is further for updating the strength entry by maintaining the strength entry at a first state when the branch prediction entry for the first instruction proves to be correct after the first instruction is resolved, and for resetting the strength entry to a second state when the branch prediction entry proves to be incorrect after the first instruction is resolved.

**10.** The computer of claim 1, wherein the next fetch address circuit is further for fetching a second instruction of the computer program after the first instruction of the computer program is fetched.

**11.** The computer of claim 10, wherein, if the first instruction is a conditional branch and the prediction entry corresponding to the first instruction in the first memory indicates Branch Not Taken, then the second instruction is the next sequential instruction following the first instruction.

**12.** The computer of claim 10, wherein, if the first instruction is a conditional branch and the prediction entry corresponding to the first instruction in the first memory indicates Branch Taken, then the second instruction is a target instruction of the first instruction.

**13.** The computer of claim 1, wherein the first memory contains a plurality of the branch prediction entries and individual ones of the branch prediction entries are accessed using a hashing function.

| ADDRESS GENERATION | 12 |
| CACHE FETCH 1 | 14 |
| CACHE FETCH 2 | 16 |
| QUEUINS | 18 |
| GROUPING | 20 |
| ISSUE | 22 |
| DECODE | 24 |
| EXECUTION | 26 |
| MEMORY CYCLE | 28 |
| WRITE BACK | 30 |

10

# FIG. 1

FIG. 2

EP 0 729 095 A1

10

FIG. 3

EP 0 729 095 A1

FIG. 4

EP 0 729 095 A1

# EP 0 729 095 A1

**European Patent Office**

## EUROPEAN SEARCH REPORT

Application Number

EP 96 30 0965

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | COMPUTER,<br>vol. 17, no. 1, January 1984, LONG BEACH, CA, US,<br>pages 6-22, XP000211855<br>J. K. F. LEE ET AL: "Branch Prediction Strategies and Branch Target Buffer Design"<br>* page 8, right-hand column, paragraph 3 - paragraph 4 * | 1-13 | G06F9/38 |
| A | THE 8TH ANNUAL SYMPOSIUM ON COMPUTER ARCHITECTURE,<br>12 - 14 May 1981, MINNEAPOLIS, MINNESOTA, US,<br>pages 135-148, XP000212048<br>J. E. SMITH: "A STUDY OF BRANCH PREDICTION STRATEGIES"<br>* page 139, left-hand column, paragraph 4 - page 140, right-hand column, paragraph 1 * | 1-13 | |
| A | IEEE MICRO,<br>vol. 13, no. 3, June 1993, LOS ALAMITOS, CA, US,<br>pages 11-21, XP000380336<br>D. ALPERT ET AL: "Architecture of the Pentium Microprocessor"<br>* page 14, right-hand column, paragraph 1 - paragraph 3 * | 5,6 | **TECHNICAL FIELDS SEARCHED (Int.Cl.6)**<br><br>G06F |

The present search report has been drawn up for all claims

| Place of search | Date of completion of the search | Examiner |
|---|---|---|
| BERLIN | 23 May 1996 | Abram, R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

13